# EUROPÄISCHE PATENTSCHRIFT

(11) **EP 0 825 912 B1**
(45) Veröffentlichungstag und Bekanntmachung des Hinweises auf die Patenterteilung: **11.12.2002**
(21) Anmeldenummer: 96916092.8
(22) Anmeldetag: 15.05.1996
(51) Int. Cl.: B23D 63/18

(54) **VERFAHREN UND VORRICHTUNG ZUM VERMESSEN UND KORRIGIEREN DES SPANNUNGSPROFILS VON SÄGEBLÄTTERN**
METHOD AND DEVICE FOR MEASURING AND CORRECTING THE TENSION PROFILE OF SAW BLADES
PROCEDE ET DISPOSITIF POUR MESURER ET CORRIGER LE PROFIL DE TENSION DE LAMES DE SCIES

(30) Priorität: 16.05.1995 DE 19517986
(43) Veröffentlichungstag der Anmeldung: 04.03.1998
(60) Teilanmeldung: 01127948.6
(73) Patentinhaber: VOLLMER WERKE MASCHINENFABRIK GMBH, D-88400 Biberach (DE)
(72) Erfinder: BECK, Ernst, D-88437 Maselheim (DE); BAILER, Norbert, D-88433 Schemmerhofen (DE); BAILER, Peter, D-88433 Schemmerhofen (DE); LENARD, Peter, D-88400 Biberach (DE)
(74) Vertreter: Goetz, Rupert, Dipl.-Ing.
(86) Internationale Anmeldenummer: EP9602096
(87) Internationale Veröffentlichungsnummer: WO96036453

(56) Entgegenhaltungen:
- DE-A- 4 214 784
- FR-A- 1 017 277
- US-A- 3 916 680
- US-A- 3 919 900
- US-A- 4 107 983

## Beschreibung

Die Erfindung betrifft ein Verfahren nach dem Oberbegriff des Anspruchs 1 sowie eine Vorrichtung zum Durchführen eines solchen Verfahrens nach dem Oberbegriff des Anspruchs 7.

Ein Verfahren und eine Vorrichtung dieser Gattung sind aus AT-B-342 385 (entspricht US-A-3,919,900) bekannt. Dort läuft ein endloses Sägeblatt für eine Bandsäge über zwei Umlenkrollen, die um je eine waagerechte Achse drehbar in einem Maschinengestell gelagert sind und einen zwischen ihnen liegenden Bereich des Maschinengestells begrenzen, der im folgenden - auch im Zusammenhang mit der vorliegenden Erfindung - als Maschinentisch bezeichnet wird. Auf dem Maschinentisch sind in Bewegungsrichtung des Sägeblattes hintereinander mehrere Stationen angeordnet, die zum Vermessen und Korrigieren des Spannungsprofils und der Rückenkrümmung des Sägeblattes erforderlich sind, nämlich eine Meßstation zum Abtasten des Blattrückens, eine Meßstation zum Abtasten des Spannungsprofils und eine Walzstation zum Korngieren des Spannungsprofils und der Krümmung des Blattrückens des Sägeblattes.

Mit Blattrücken ist hier und im folgenden bei einem einseitig verzahnten Sägeblatt dessen von der Verzahnung abgewandter Rand gemeint. Damit sollen jedoch - auch im Zusammenhang mit der vorliegenden Erfindung - beidseitig verzahnte Sägeblätter für Bandsägen oder auch für Gattersägen nicht ausgeschlossen werden; bei solchen Sägeblättern wird eine der beiden Verzahnungen anstelle eines glatten Zahnrückens abgetastet, um festzustellen, ob und wie das Sägeblatt in seiner Ebene gekrümmt ist und ob es von seiner vorgesehenen Bewegungsrichtung abweicht.

Bei der erwähnten bekannten Vorrichtung weist die Meßstation zum Abtasten des Blattrückens zwei kufenartige Führungen auf, die bezogen auf die Bewegungsrichtung des Sägeblattes in einem Abstand hintereinander angeordnet sind und eine senkrechte Anlageebene für den Blattrücken definieren. Zwischen diesen beiden Führungen ist ein Taster angeordnet, der den Blattrücken in der Ebene des Sägeblattes normal zu dessen Bewegungsrichtung abtastet. Anhand der auf diese Weise ermittelten Daten läßt sich an jeder Stelle des Blattrückens dessen Krümmungsradius berechnen.

Die Meßststion zum Abtasten des Spannungsprofils ist, bezogen auf die Bewegungsrichtung des Sägeblattes, in einem Abstand hinter der Meßstation zum Abtasten des Blattrückens angeordnet und weist zwei Formplatten mit kreisbogenförmigen Oberkanten auf, die parallel zur Bewegungsrichtung des Sägeblattes in je einer senkrechten Ebene angeordnet sind und dieses in je einer Randzone abstützen, wodurch sie eine Meßstrecke definieren. In einem Anfangsbereich und in einem Endbereich dieser Meßstrecke ist am Maschinengestell je ein Paar Pfosten befestigt, und am oberen Ende jedes Pfostens ist ein Niederhaltearm in einer senkrechten Längsebene schwenkbar angelenkt, an dessen unterem Ende eine Niederhalterolle gelagert ist. Von den insgesamt vier Niederhalterollen wird das Sägeblatt im Anfangs- und im Enbereich der Meßstrecke auf die beiden Formplatten gedrückt. Entlang der Oberkanten der Formplatten sind Magnete angeordnet, die das Sägeblatt hindern, im Bereich der Formplatten Ausbuchtungen zu bilden, anstatt sich in der vorgesehenen Weise an die kreisbogenförmigen Oberkanten der Formplatten anzuschmiegen und an ihnen entlangzugleiten. Dem Sägeblatt wird also auf dieser Meßstrecke eine durch die Formplatten festgelegte Krümmung aufgezwungen, die sich nur dadurch ändern läßt, daß man die Formplatten gegen anders geformte austauscht. In einer senkrechten Mittelebene dieser Meßstrecke ist ein Taster quer über das Sägeblatt hinweg hin- und herbewegbar, um dessen Spannungsprofil zu messen.

Die Gründe für die Entstehung des Spannungprofils und die Grundsätze nach denen es durch Walzen korrigiert wird, sind bekannt; hierzu wird neben der genannten AT-B- 342 385 beispielsweise auf die DE-A-42 14 784 verwiesen.

Gemäß AT-B-342 385 läuft das Sägeblatt schließlich durch eine Walzstation, die ebenfalls auf dem Maschinentisch angeordnet ist und ein Walzenpaar aufweist, das quer zum Sägeblatt verstellbar und mit einem hydraulischen Druck belastbar ist, um auf wählbare Zonen des Sägeblattes verformend einzuwirken und dadurch dessen Spannungsprofil zu korrigieren.

Bei der aus der genannten DE-A-42 14 784 bekannten Vorrichtung ist zwischen zwei Umlenkrollen, über die ein Sägeblatt läuft, ebenfalls ein Maschinentisch angeordnet, auf dem in Bewegungsrichtung des Sägeblattes hintereinander mehrere Meßstrecken angeordnet sind, nämlich eine Spannungsprofilmeßstrecke, eine Wegmeßstrecke und eine Beulen- und Dellenmeßstrecke. Die Spannungsprofilmeßstrecke ist in einem Bereich angeordnet, in dem das Sägeblatt infolge seiner Umlenkung durch eine der beiden Umlenkrollen gebogen ist und deshalb von alleine, ohne erst angehoben werden zu müssen, sein Spannungsprofil zeigt. Hinter der letzten genannten Meßstrecke, der Beulen- und Dellenmeßstrecke, ist eine Bearbeitungseinheit angeordnet, die mehrere Walzenpaare aufweist, nämlich eines zum Planieren von Beulen, eines zum Planieren von Dellen und eines zum Korrigieren des Spannungsprofils des Sägeblattes.

Der Erfindung liegt die Aufgabe zugrunde, das Vermessen und Korrigieren des Spannungsprofils eines langgestreckten Sägeblattes und, soweit erforderlich, auch das kurz als Planieren bezeichnete Beseitigen von Beulen und Dellen verfahrens- und vorrichtungstechnisch zu vereinfachen.

Die Aufgabe ist erfindungsgemäß bei einem Verfahren der eingangs genannten Gattung mit den kennzeichnenden Merkmalen des Anspruchs 1 gelöst. Vorteilhafte Weiterbildungen des Verfahrens sind Gegenstand der Ansprüche 2 bis 6.

Soweit sie eine Vorrichtung betrifft, ist die genannte Aufgabe erfindungsgemäß mit den Merkmalen des Anspruchs 7 gelöst, wobei letztere gemäß den Ansprüchen 8 bis 11 weitergebildet sein können.

Damit wird erreicht, daß Sägeblätter sehr unterschiedlicher Breite und Dicke in kurzer Folge nacheinander, ohne zeitraubende Umrüstarbeiten, vermessen und bezüglich ihres Spannungprofils korrigiert werden können.

Die Umstellung auf Sägeblätter unterschiedlicher Breite und Dicke, also auch mit unterschiedlicher Steifigkeit, wird besonders erleichtert, wenn die Stützkraft nur in der Meßebene ausgeübt wird, und dort vorzugsweise nur in einem Abstand von beiden Randzonen in einer Zone, in der die maximale Profilhöhe zu erwarten ist. Die Anpassung an Sägeblätter unterschiedlicher Steifigkeit wird ferner vorzugsweise dadurch erleichtert, daß Niederhaltekräfte nur in entsprechend der Breite und Dicke des Sägeblattes variablen, gleichen Abständen vor und hinter der Meßebene auf die Randzonen des Sägeblattes ausgeübt werden. Die konstruktiven Mittel, mit denen diese Anpassungsfähigkeit erreicht wird, sind äußerst einfach gestaltet und leicht zu handhaben.

Ein Ausführungsbeispiel der Erfindung wird im folgenden anhand schematischer Zeichnungen mit weiteren Einzelheiten erläutert.
Es zeigen:
- Fig. 1: den Hauptteil einer erfindungsgemäßen Maschine zum Richten von Sägeblättern in Schrägansicht,
- Fig. 2: einen vergrößerten und weiter schematisierten Ausschnitt aus Fig.1,
- Fig. 3: die Vorderansicht der gesamten Maschine,
- Fig. 4: die zu Fig.3 gehörige Draufsicht,
- Fig. 5: die Vorderansicht des Hauptteils der Maschine in größerem Maßstab,
- Fig. 6: die zu Fig.5 gehörige Draufsicht,
- Fig. 7: eine weiter vergrößerte Vorderansicht einer Baugruppe aus Fig.5,
- Fig. 8: eine der Fig.7 entsprechende Rückenansicht,
- Fig. 9: eine weiter vergrößerte Längsansicht in Richtung der Pfeile IX-IX in Fig.5,
- Fig.10: einen vergrößerten Schnitt in der Ebene X in Fig.5,
- Fig.11: einen vergrößerten Ausschnitt aus Fig.5,
- Fig.12: eine Baugruppe aus Fig.6, in einem vergrößerten waagerechten Schnitt,
- Fig.13: eine weitere Baugruppe aus Fig.6, ebenfalls in vergrößertem waagerechten Schnitt, und
- Fig.14: den Schnitt XIV-XIV in Fig.13.

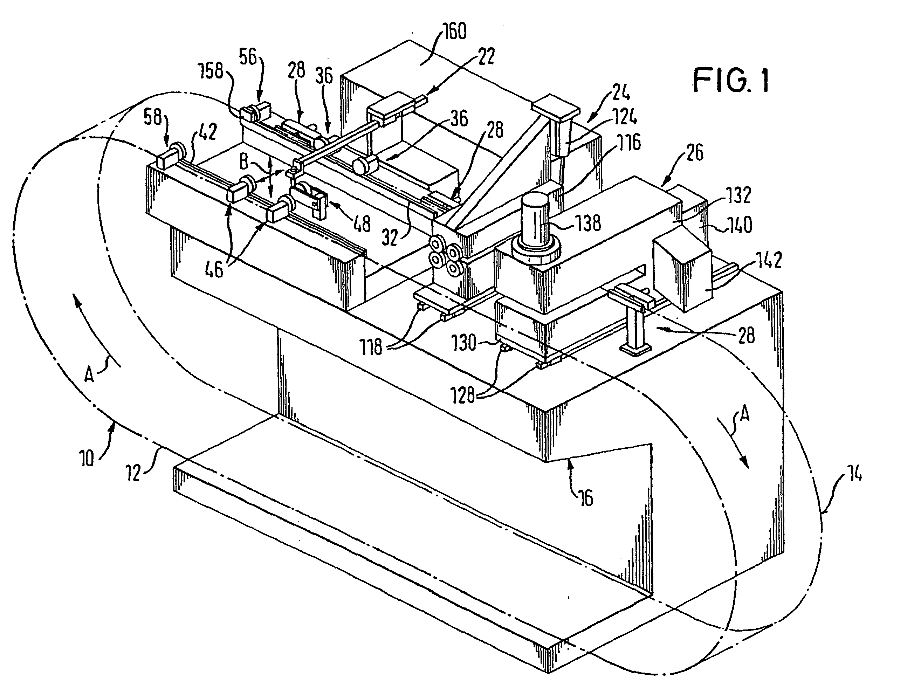

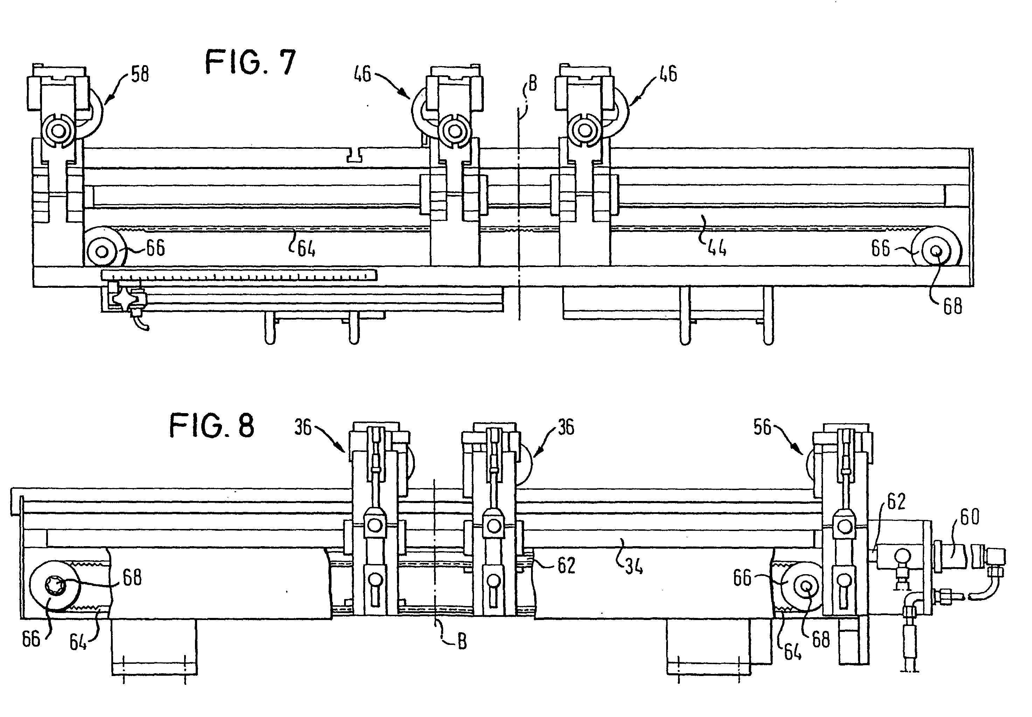

Die dargestellte Maschine dient zum automatischen Richten von Sägeblättern 10. Dargestellt ist ein Bandsägeblatt, das an einer Längsseite Zähne 12 und an der gegenüberliegenden Längsseite einen glatten Blattrücken 14 aufweist; es können aber auch beidseitig verzahnte Bandsägeblätter sowie Gattersägeblätter bearbeitet werden. Die Maschine hat einen länglichen Maschinentisch 16, an dessen beide Stirnseiten als Verlängerung je ein Gestell 18 angebaut ist. An den Gestellen 18 sind in einstellbarem Abstand vom Maschinentisch 16 waagerechte, zueinander parallele Führungswalzen 20 gelagert. Das Sägeblatt 10 läuft in Richtung des Pfeils A in Fig.1 bis 3 über die Führungswalzen 20 an dem linken Gestell 18 und anschließend durch mehrere auf dem Maschinentisch 16 angeordnete Stationen, nämlich eine Meßstation 22, welche die Oberfläche des Sägeblattes 10 in senkrechter Richtung abtastet, eine Planierstation 24 zum Einebenen von Beulen und Dellen im Sägeblatt 10, eine Walzstation 26, mit der sich das Sägeblatt 10 antreiben und mit einem gewünschten Spannungsprofil versehen läßt, mindestens eine Meßstation 28, die den Blattrücken 14 in waagerechter Richtung, quer zu dessen Bewegungsrichtung, abtastet, und über weitere Führungswalzen 20 am Maschinentisch 16 und am rechten Gestell 18. Das Sägeblatt 10 kann auch in Gegenrichtung des Pfeils A bewegt werden. Im dargestellten Beispiel sind drei Meßstationen 28 zum Abtasten des Blattrückens 14 über die gesamte Länge des Maschinentisches 16 verteilt angeordnet. Die genannten Stationen und Führungswalzen 20 sind in Fig.7 bis 12 bzw. Fig.13 und 14 näher dargestellt und werden im folgenden beschrieben:

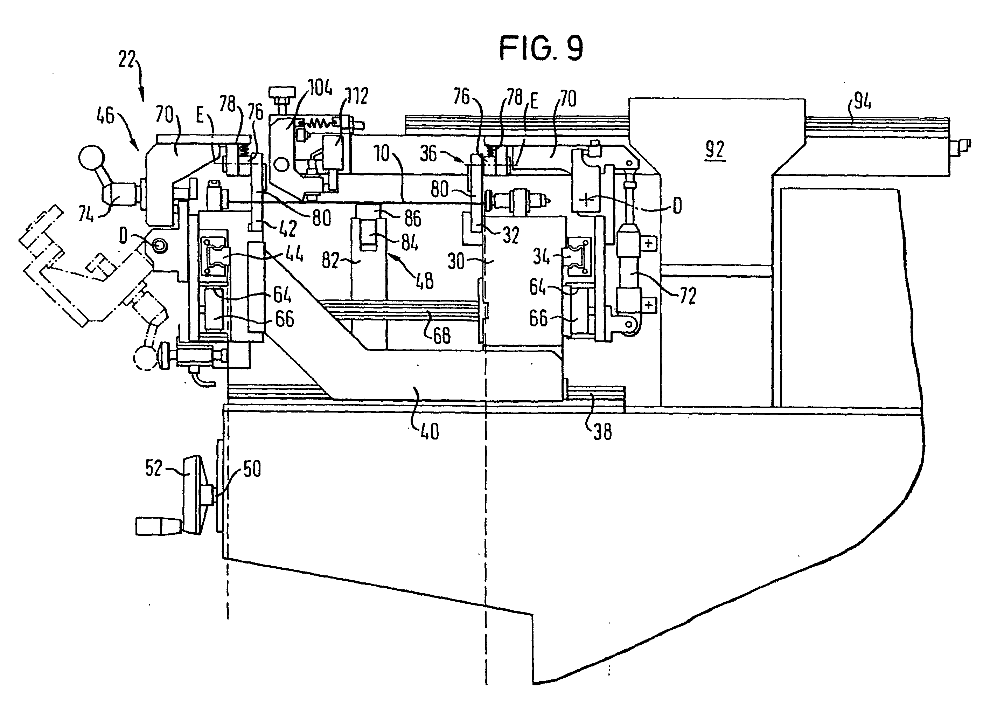

Zur Meßstation 22 gehören auf dem Maschinentisch 16 befestigte Ständer 30, an deren in Fig.9 linker Seite eine ortsfeste, waagerechte hintere Blattauflage 32 in Gestalt einer längsgerichteten, gehärteten und geschliffenen Leiste aus Stahl angeordnet ist. Parallel dazu ist an der Rückseite der Ständer 30 eine Längsführung 34 befestigt, an der zwei hintere Niederhalter 36 symmetrisch zu einer senkrechten Ebene verstellbar angeordnet sind, die sich quer zur Längsrichtung des Maschinentisches 16 erstreckt und im folgenden als Meßebene B bezeichnet wird. Auf dem Maschinentisch 16 sind ferner zwei Querführungen 38 befestigt, auf denen je ein Querschlitten 40 verstellbar geführt ist. Die beiden Querschlitten 40 tragen eine vordere waagerechte Blattauflage 42, die sich ebenfalls in Längsrichtung der Maschine, also parallel zur hinteren Blattauflage 32, erstreckt und wie diese von einer Leiste aus gehärtetem und geschliffenem Stahl gebildet ist. Die Oberflächen der beiden Blattauflagen 32 und 42 liegen in einer gemeinsamen waagerechten Ebene, so daß das Sägeblatt 10, soweit es auf ihnen liegt, waagerecht gehalten ist. An den beiden Querschlitten 40 ist ferner eine vordere Längsführung 44 befestigt, auf der zwei vordere Niederhalter 46 symmetrisch zur Meßebene B verstellbar angeordnet sind.

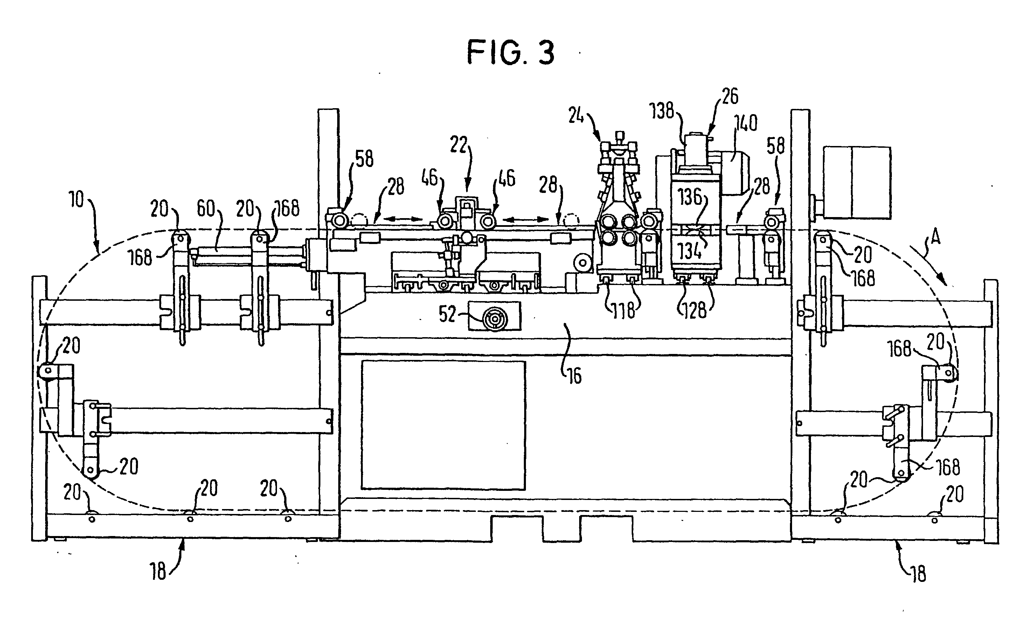

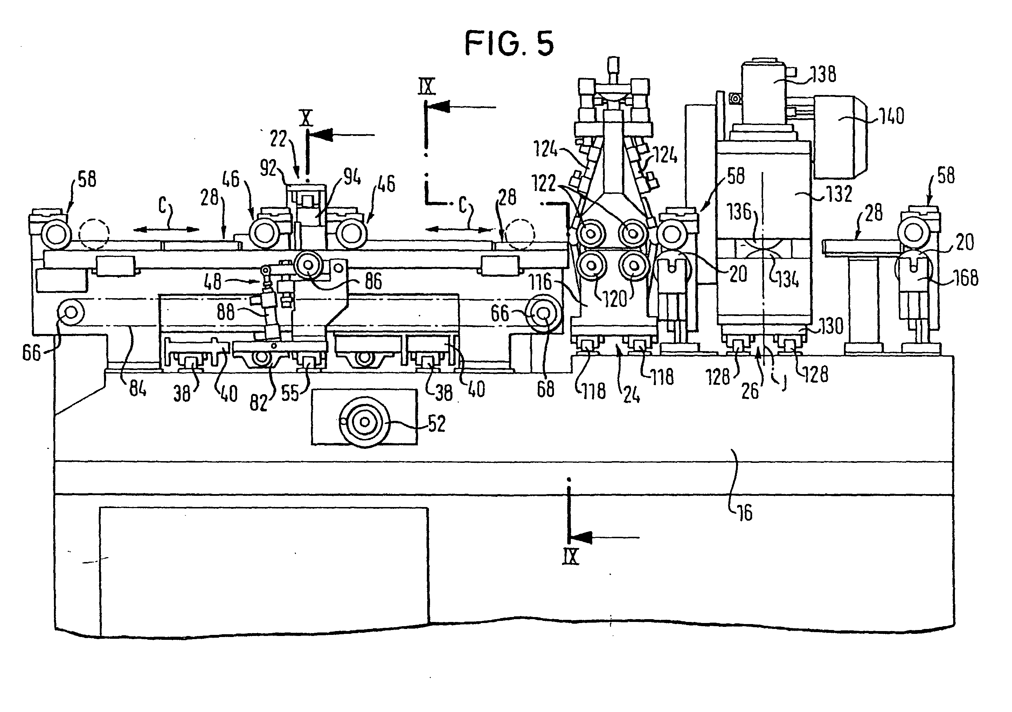

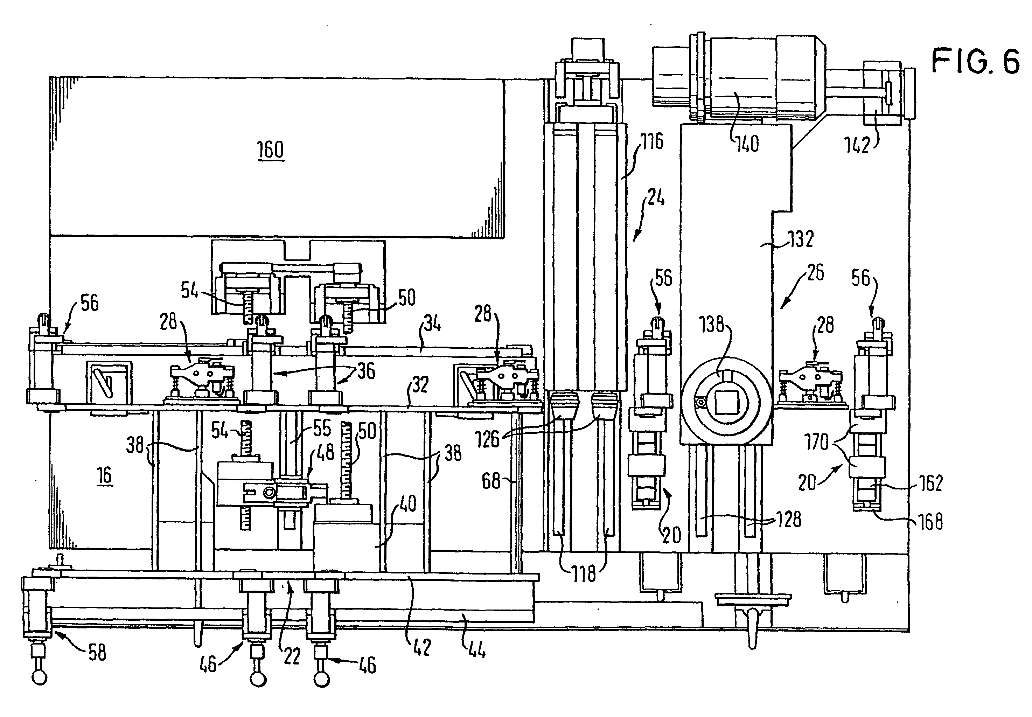

Zur Meßstation 22 gehört ferner eine Stützeinrichtung 48 (Fig.6 und 9), deren Aufgabe es ist, das Sägeblatt 10 in der Meßebene B im Bereich zwischen den beiden Blattauflagen 32 und 42, von der hinteren Blattauflage 32 etwa ebensoweit entfernt wie von der vorderen 42, annähernd punktförmig abzustützen, wie weiter unten näher beschrieben wird. Die beiden Querschlitten 40 sind längs der Querführungen 38 mittels einer parallel dazu im Maschinentisch 16 axial unverschiebbar gelagerten Gewindespindel 50 (Fig.6) verstellbar. Die Gewindespindel 50 läßt sich mittels eines Handrades 52 (Fig.3, 5 und 9) drehen und ist in einem Untersetzungsverhältnis 2:1 mit einer sich parallel zu ihr erstreckenden, gleichen Gewindespindel 54 verbunden, die in Gewindeeingriff mit der Stützeinrichtung 48 steht. Durch Drehen des Handrades 52 läßt sich der Abstand der querverstellbaren vorderen Blattauflage 42 und Niederhalter 46 von der ortsfesten hinteren Blattauflage 32 samt zugehörigen Niederhaltern 36 an die Breite des zu bearbeitenden Sägeblattes 10 anpassen; gleichzeitig wird die Stützeinrichtung 48 längs einer weiteren waagerechten Querführung 55 (Fig.5 und 6) so verstellt, daß ihre Abstandsverhältnisse von den beiden Blattauflagen 32 und 42 erhalten bleiben.

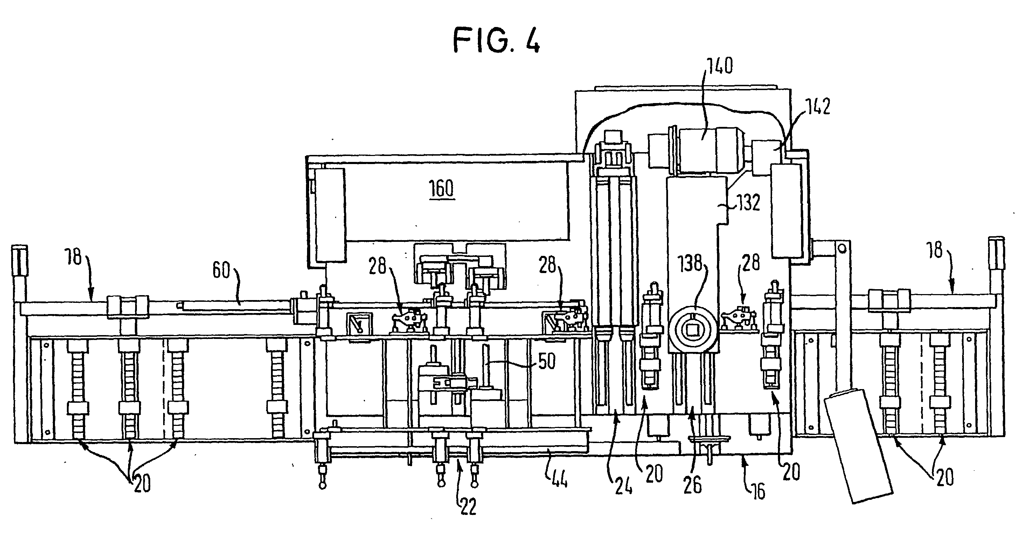

An dem in Fig.1 bis 6 linken Ende des Maschinentisches 16 ist hinten, an der vom Betrachter der Fig.1, 3 und 5 abgewandten Seite, ein ortsfester Niederhalter 56 angeordnet und vorne ein Niederhalter 58, der mit den beiden Querschlitten 40 zu gemeinsamer Querbewegung verbunden, also ebenfalls entsprechend der Breite des Sägeblattes 10 einstellbar ist.

Die symmetrisch zur Meßebene B angeordneten Niederhalter 36 und 46 sind in den Zeichnungen in einer Stellung abgebildet, in der sie ihren geringstmöglichen Abstand von der Meßebene B haben. Diese Stellung dient zum Messen besonders schmaler und dünner Sägeblätter 10. Aus der abgebildeten Stellung lassen sich die beiden hinteren Niederhalter 36 und in gleicher Weise auch die beiden vorderen Niederhalter 46 in Richtung der Doppelpfeile C in Fig.5 voneinander weg verstellen, wobei ihre Anordnung symmetrisch zur Meßebene B bleibt. In Fig.5 sind mit gestrichelten Kreisen die Stellungen angedeutet, in denen die Niederhalter 36 und 46 ihren größtmöglichen Abstand von der Meßebene B haben. Diese Stellung ist zum Messen besonders breiter und dicker Sägeblätter vorgesehen.

Zum Verstellen der Niederhalter 36 und 46 in Längsrichtung des Maschinentisches 16 ist ein Antrieb 60 (Fig.3, 4 und 8) vorgesehen, der im dargestellten Beispiel eine hydraulische Kolbenzylindereinheit ist und eine Kolbenstange 62 aufweist, deren Ende an einem der beiden hinteren Niederhalter 36 befestigt ist. Um sicherzustellen, daß die hinteren Niederhalter 36 und entsprechend auch die vorderen Niederhalter 46 stets symmetrisch zur Meßebene B bewegt werden, ist an der Vorder- und Rückseite des Maschinentisches 16 je ein Zahnriemen 64 in einer senkrechten Längsebene über zwei Umlenkräder 66 geführt. Die auf der Vorder- und Rückseite des Maschinentisches 16 angeordneten Umlenkräder 66 sind durch Wellen 68 (Fig.7 bis 9) miteinander synchronisiert. Von den beiden hinteren Niederhaltern 36 ist einer mit dem oberen und der andere mit dem unteren Trum des hinteren Zahnriemens 64 fest verbunden, und in entsprechender Weise ist von den beiden vorderen Niederhaltern 46 einer mit dem oberen und der anderen mit dem unteren Trum des vorderen Zahnriemens 64 verbunden. Die Umlenkräder 66 des hinteren Zahnriemens 64 sind auf den Wellen 68 starr befestigt; die Umlenkräder 66 des vorderen Zahnriemens 64 sind hingegen auf Vielnutprofilen der beiden Wellen 68 axial verschiebbar geführt, so daß der vordere Zahnriemen 64 an Querverstellungen der beiden vorderen Niederhalter 46 teilnehmen kann. Sämtliche Niederhalter 36, 46, 56 und 58 sind im wesentlichen gleich gestaltet. Sie haben je einen Schwenkarm 70 (Fig.9), der um eine waagerechte Längsache D schwenkbar ist. Jeder der hinteren Niederhalter 36 und 56 hat zum Schwenken seines Schwenkarms 70 eine hydraulische Kolbenzylindereinheit 72. Die vorderen Niederhalter 46 und 58 haben je einen Knebel 74, mit dem sich der zugehörige Schwenkarm 70 zwischen der in Fig.9 mit gestrichelten Linien angedeuteten Offenstellung und der mit vollen Linien gezeichneten Schließstellung manuell verschwenken und in der Schließstellung verriegeln läßt. Am Ende jedes Schwenkarms 70 ist ein Lenker 76 um eine waagerechte Querachse E schwenkbar gelagert und durch eine Feder 78 im Sinne einer in Schließstellung nach unten gerichteten Schwenkung vorgespannt. Am Ende jedes Lenkers 76 ist eine Niederhalterolle 80 um eine zur Querachse E parallele Achse drehbar gelagert. Die Niederhalterollen 80 sämtlicher Niederhalter 36, 46, 56 und 58 sind senkrecht über der zugehörigen Blattauflage 32 bzw. 42 angeordnet. In Schließstellung drücken die Niederhalterollen 80 mit der von der zugehörigen Feder 78 erzeugten Vorspannung auf das Sägeblatt 10, das in einem seinen Zähnen 12 bzw. seinem Blattrücken 14 benachbarten Bereich gleitend auf den Blattauflagen 32 und 42 aufliegt.

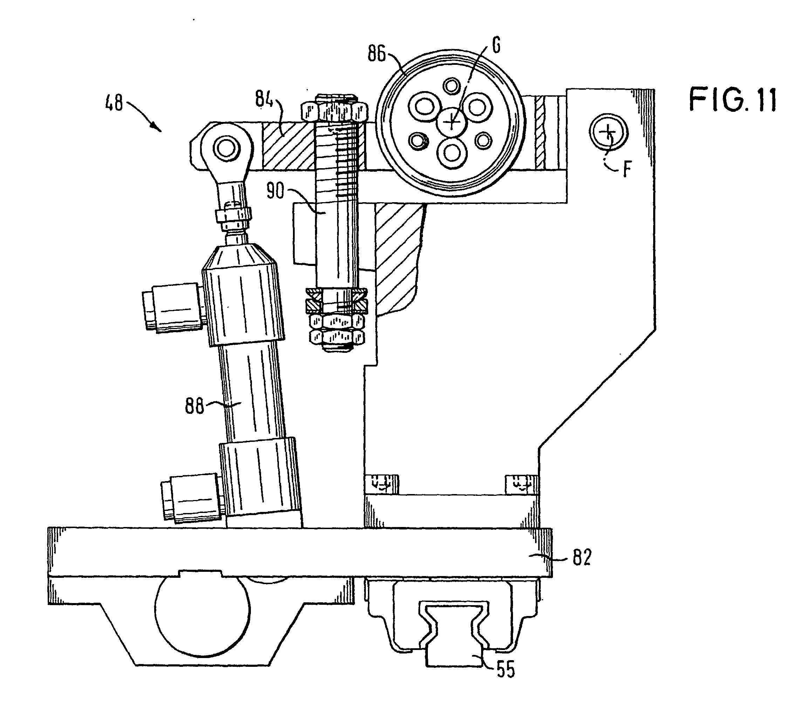

Zur Stützeinrichtung 48 (Fig.9 und 11) gehört ein Stützschlitten 82, der mittels der Gewindespindel 54 auf der weiteren Querführung 55 verstellbar ist und gemäß Fig.11 einen Stützarm 84 trägt, der um eine waagerechte Querachse F schwenkbar ist. Am Stützarm 84 ist eine Stützrolle 86 mit balliger Mantelfläche um eine zur Querachse F parallele, also ebenfalls querliegende waagerechte Achse G drehbar gelagert. Anstatt oder zusätzlich zu ihrer Balligkeit kann die Stützrolle 86 einen elastischen Belag aufweisen. In jedem Fall soll verhindert werden, daß sich Kanten der Stützrolle 86 in das Sägeblatt 10 einprägen. Am Stützschlitten 82 stützt sich eine Hubvorrichtung 88 ab, im dargestellten Beispiel eine hydraulische Kolbenzylindereinheit, deren Kolbenstange am Ende des Stützarms 84 angelenkt ist. Durch Ausfahren der Hubvorrichtung 88 läßt sich der Stützarm 84 aus seiner in Fig.11 abgebildeten Ruhestellung nach oben schwenken; diese Schwenkung und somit auch die mit ihr verbundene Verstellung der Stützrolle 86 nach oben, wird durch einen Hubbegrenzer 90 begrenzt, der im dargestellten Beispiel von einem Gewindebolzen gebildet ist.

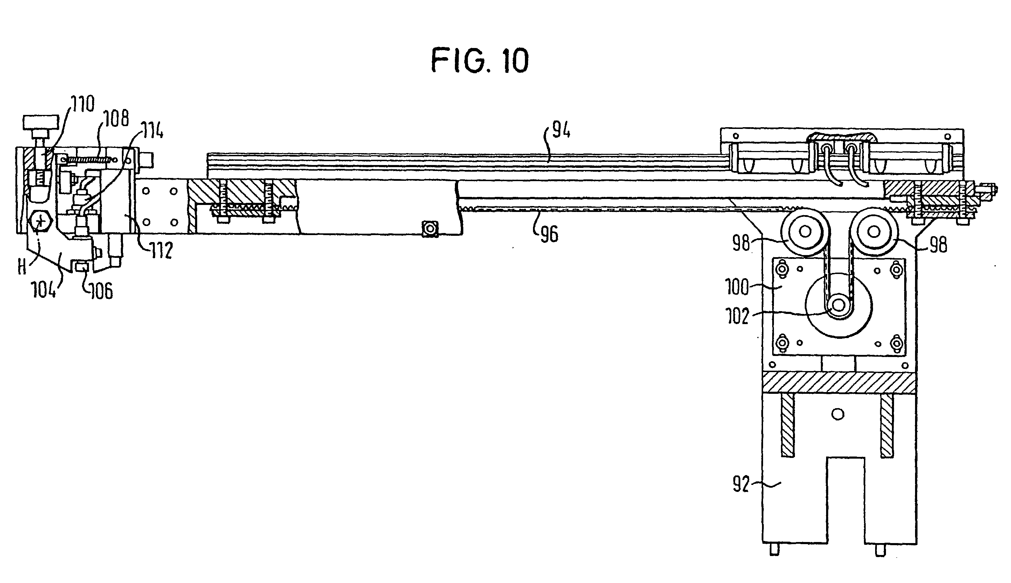

Zur Meßstation 22 gehört ferner ein am Maschinentisch 16 befestigter Ständer 92 (Fig.9 und 10), an dem ein Meßschlitten 94 in der Meßebene B waagerecht verstellbar geführt ist. Am Meßschlitten 94 sind die beiden Enden eines Zahnriemens 96 befestigt, der über Umlenkrollen 98 und ein von einem Motor 100, beispielsweise Schrittmotor, antreibbares Ritzel 102 läuft. Der Meßschlitten 94 hat ein vorderes, in Fig.9 und 10 links angeordnetes Ende, an dem ein Winkelhebel 104 um eine waagerechte Längsachse H schwenkbar gelagert ist. Der Winkelhebel 104 trägt einen ersten Meßwertaufnehmer 106 und ist durch eine Feder 108 vorgespannt, die bestrebt ist, ihn an einem einstellbaren Anschlag 110 anliegend zu halten, wodurch eine Betriebsstellung des Meßwertaufnehmers 106 definiert ist. Aus der Betriebsstellung läßt sich der Meßwertaufnehmer 106 durch einen am Winkelhebel 104 angelenkten Elektromagneten 112 in eine Ruhestellung schwenken. In der Nähe des vorderen Endes des Meßschlittens 94 ist außerdem ein zweiter Meßwertaufnehmer 114 fest angebracht. Der erste Meßwertaufnehmer 106 hat beispielsweise einen Meßbereich von 1,5 mm und ist im Stande, Beulen und Dellen des Sägeblattes 10 mit einer Genauigkeit von 0,01 mm zu messen. Der zweite Meßwertaufnehmer 114 hat einen ungefähr um eine Zehnerpotenz größeren Meßbereich und dient dazu, das Spannungsprofil des Sägeblattes 10 aufzunehmen.

Die Planierstation 24 ist als solche von bekannter Bauart und deshalb nicht einzeln dargestellt. Sie hat ein in Seitenansicht C-förmiges Walzengestell 116 (Fig.1, 5 und 6), das auf am Maschinentisch 16 befestigten Querführungen 118 verstellbar ist. Im Walzengestell 118 sind zwei untere Walzen 120 fest und zwei obere Walzen 122 mittels je einer Exzenteranordnung verstellbar gelagert. Durch Verstellen der oberen Walzen 122 mittels je eines Stelltriebes 124, beispielsweise je einer hydraulischen Kolbenzylindereinheit, läßt sich ein Walzdruck auf das Sägeblatt 10 ausüben, das von unten her durch die unteren Walzen 120 abgestützt wird. Die Drehachsen sämtlicher Walzen 120 und 122 erstrecken sich waagerecht quer zur Längsrichtung des Maschinentisches 16; die Walzen 120 und 122 sind frei drehbar und haben je einen konischen Ansatz 126, der es erleichtert, das Sägeblatt 10 quer zum Maschinentisch 16, von vorne nach hinten, zwischen die Walzen 120 und 122 einzuführen.

Auf dem Maschinentisch 16 ist ein weiteres Paar Querführungen 128 befestigt, auf denen ein Unterbau 130 der Walzstation 26 verstellbar geführt ist. Auf dem Unterbau 130 ist ein in Seitenansicht ebenfalls C-förmiges Walzengestell 132 (Fig.1, 2, 5 und 6) um eine senkrechte Achse J schwenkbar gelagert. Im Walzengestell 132 sind eine untere Walze 134 und eine obere Walze 136 um zueinander parallele waagerechte Drehachsen W1 und W2 drehbar gelagert. Die obere Walze 136 ist mittels einer Anpreßvorrichtung 138, beispielsweise einer hydraulischen Kolbenzylindereinheit, gegen das auf der unteren Walze 134 abgestützte Sägeblatt 10 drückbar. Die Schwenkachse J schneidet beide Drehachsen W1 und W2 unter annähernd rechten Winkeln und erstreckt sich durch die Stellen, an denen die Walzen 134 und 136 das Sägeblatt 10 berühren. Zum Antreiben der Walzen 134 und 136 weist die Walzstation 26 einen Motor 140 auf. Zur Walzstation 26 gehört ferner ein Stelltrieb 142, beispielsweise ein Servomotor, mit dem sich das Walzengestell 132 um die senkrechte Achse J schwenken und dadurch aus einer Mittellage, in der die Walzen 134 und 136 in Längsrichtung des Maschinentisches 16 laufen, derart geregelt schrägstellen läßt, daß der Blattrücken 14 innerhalb eines vorgegebenen Toleranzbereichs an der dritten der drei ihm zugeordneten Meßstationen 28 entlangläuft. Hierfür genügt es im allgemeinen, das Walzengestell um weniger als 1° nach der einen oder anderen Seite aus seiner Mittellage herauszuschwenken. Vorsorglich beträgt der maximale Schwenkbereich etwa 3° nach jeder Seite, also insgesamt etwa 6°.

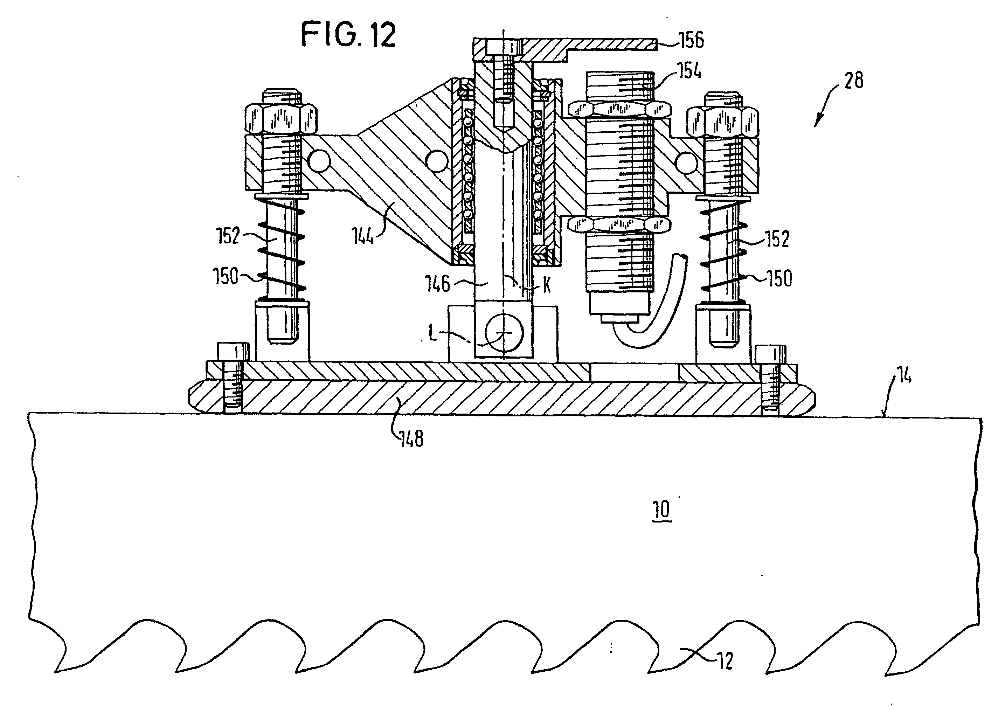

Von den drei dem Blattrücken 14 zugeordneten Meßstationen 28 ist die erste am Anfang, die zweite nahe der Mitte und die dritte nahe dem Ende des Maschinentisches 16 angeordnet. Die drei Meßstationen 28 sind gleich; eine von ihnen ist in Fig.12 in einem waagerechten Schnitt dargestellt. Sie hat einen Träger 144, der am Maschinentisch 16 befestigt ist und eine waagerechte, querverlaufende Stange 146 längs deren Achse K verschiebbar führt. An der Stange 146 ist ein Meßschlitten 148 in der Art eines Waagebalkens, jedoch um eine senkrechte Achse L schwenkbar, gelagert. Zwei vorgespannte Federn 150 sind bestrebt, den Meßschlitten 148 in einer zur Längsrichtung des Maschinentisches 16 parallelen Normallage gemäß Fig.12 zu halten. Die beiden Federn 150 stützen sich am Träger 144 ab und sind auf je einem in diesen eingeschraubten Bolzen 152 geführt. Am Träger 144 ist ein Abstandssensor 154 befestigt, der die Lage einer an der Stange 146 befestigten Platte 156, und somit auch die Lage des Meßschlittens 148, ständig mißt.

Am Maschinentisch 16 ist ferner ein Sensor 158 (Fig.1) befestigt, der ein Signal abgibt, wenn eine Markierung auf dem Sägeblatt 10, beispielsweise ein mit einem Filzschreiber aufgebrachter Querstrich, sich an ihm vorbeibewegt. Sämtliche von der Meßstation 22 mit den Meßwertaufnehmern 106 und 114 abgegebenen Signale sowie die von den drei Meßstationen 28 und vom Sensor 158 abgegebenen Signale werden einer zentralen Rechenund Steuereinheit 160 zugeführt. Das Gleiche gilt für Signale, welche die Stellung des Stelltriebs 142 und die Umdrehungen der Walzen 134 und 136 anzeigen.

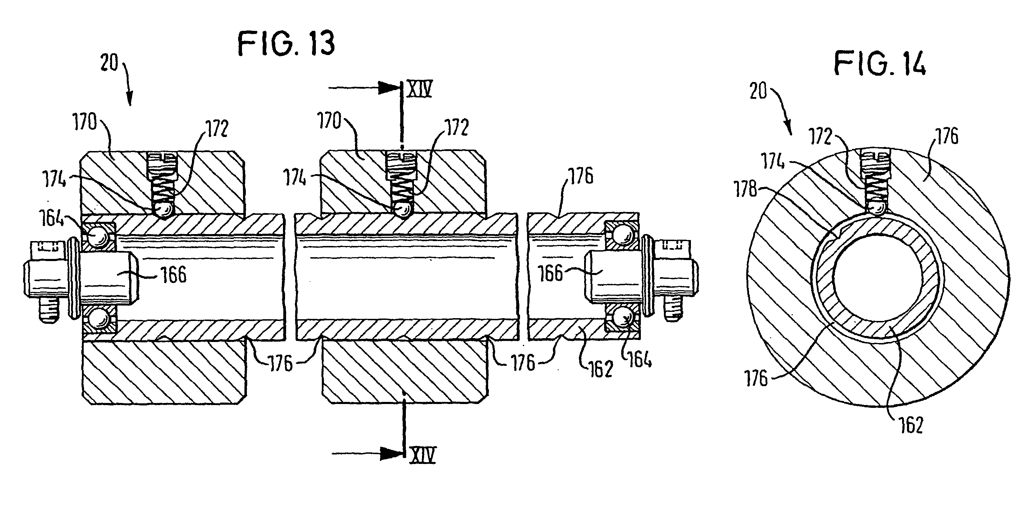

Zusätzlich zu den an den beiden Gestellen 18 gelagerten Führungswalzen 20 ist beiderseits der Walzstation 26 je eine weitere solche Führungswalze 20 unterhalb dort angeordneter Niederhalter 56 und 58 gelagert. Sämtliche Führungswalzen 20 sind im wesentlichen gleich gestaltet; sie haben gemäß Fig.13 und 14 je einen Achskörper 162, der im dargestellten Beispiel rohrförmig ist und an seinen beiden Enden mittels je eines Wälzlagers 164 auf je einem Achszapfen 166 gelagert ist. Die Achszapfen 166 sind axial außen vierkantig, so daß sie gegen Drehen gesichert sind, wenn sie in komplementären Halterungen 168 (Fig.3, 5 und 6) am Maschinentisch 16 oder einem der Gestelle 18 aufgenommen sind.

Die Länge der Achskörper 162 ist etwas größer als die Breite des größten auf der Maschine zu bearbeitenden Sägeblattes 10. Um zu vermeiden, daß die in der Regel geschränkten oder mit Hartmetallplättchen od. dgl. versehenen Zähne 12 den Achskörper 162 berühren, und um sicherzustellen, daß das über einen solchen Achskörper 162 laufende Sägeblatt 10 ausreichend abgestützt ist, sind auf jedem Achskörper 162 zwei oder mehr Laufringe 170 angeordnet, die vorzugsweise aus Kunststoff oder aus gehärtetem Stahl bestehen und eine zylindrische Mantelfläche von im Vergleich zum Achskörper 162 größerem Durchmesser aufweisen. Mindestens einer der auf jedem Achskörper 162 angeordneten Laufringe 170 ist axial verstellbar, so daß er sich in einem Bereich anordnen läßt, in dem er das Sägeblatt 10 in der Nähe der Zähne 12 abstützt, ohne diese zu berühren.

Gemäß Fig.13 sind beide dort dargestellten Laufringe 170 axial verstellbar, jedoch gegen unbeabsichtigte axiale Verstellung dadurch gesichert, daß sie in je einer radialen Bohrung eine Feder 172 enthalten, die einen Rastkörper 174 radial nach innen in eine Ringnut 176 des Achskörpers 162 drückt. Im dargestellten Beispiel sind als Rastkörper 174 Kugeln vorgesehen, und die Ringnuten 176 haben je einen V-förmigen Querschnitt. Auf diese Weise läßt sich jeder Laufring 170 wahlweise in einer von mehreren durch die Anordnung der Ringnuten 176 vorbestimmten Stellungen festlegen. Die Anzahl und Abstände der Ringnuten 176 sind so gewählt, daß eine hinreichend feinstufige Einstellung der Laufringe 170 möglich ist.

Wenn ein Sägeblatt 10 über die Laufringe 170 läuft, werden diese in Drehung versetzt und nehmen durch Reibung den zugehörigen Achskörper 162 mit, der seinerseits durch die Wälzlager 164 auf den zugehörigen Achszapfen 166 leichtgängig gelagert ist. Für den Fall, daß es erforderiich sein sollte, eine unbeabsichtigte Relativdrehung zwischen den Laufringen 170 und dem Achskörper 162, und einen dadurch bedingten Verschleiß der Rastkörper 174 und Ringnuten 176 zu vermeiden, kann in den Achskörper 162 eine achsparallele Längsnut 178 eingearbeitet sein. An den Kreuzungspunkten der Längsnut 178 mit den Ringnuten 176 ergeben sich Vertiefungen, in welche die Rastkörper 174 tiefer eindringen als dies bei bloßem Einrasten in eine der Ringnuten 176 der Fall ist. Auf diese Weise sind die aufringe 170 im dargestellten Beispiel sowohl gegen Relativdrehung wie gegen Axialverschiebung gegenüber dem zugehörigen Achskörper 162 gesichert. Dennoch lassen sich die Laufringe 170 mit einer mäßigen von außen aufgebrachten Kraft aus ihrer Verrastung lösen und in einer beliebigen anderen Ringnut 176 neu einrasten.

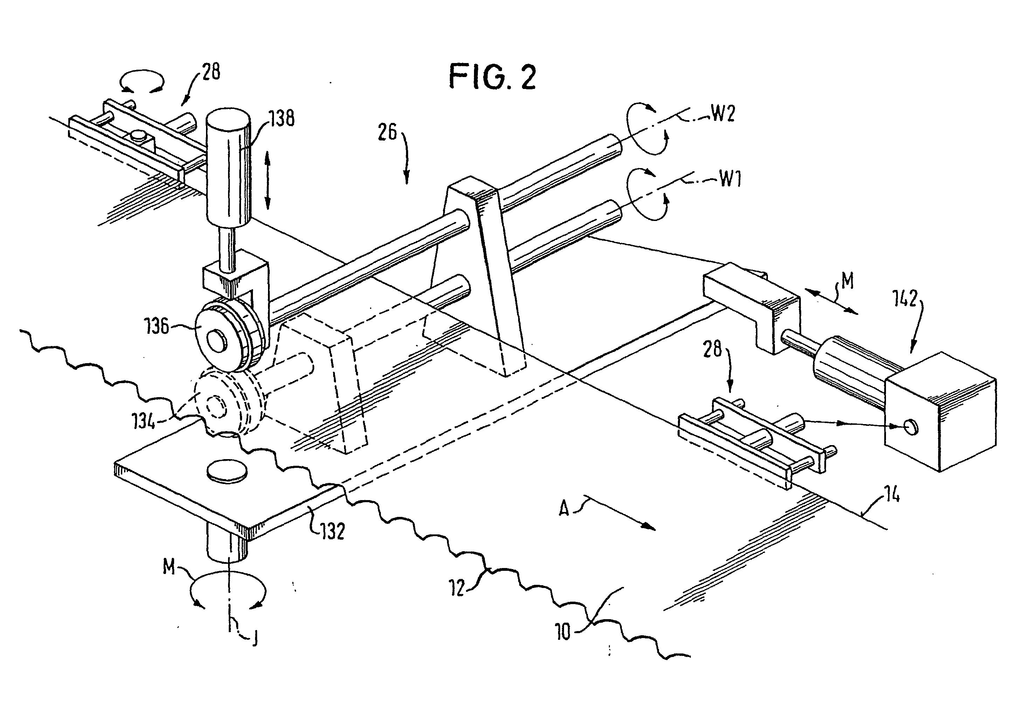

Die dargestellte Maschine arbeitet folgendermaßen:
a) für jegliche am Sägeblatt 10 auszuführende Richtarbeit und für die ihr vorausgehenden Messungen ist es erforderlich, das Sägeblatt 10 in Richtung des Pfeils A - gegebenenfalls auch wechselweise in entgegengesetzter Richtung - zu bewegen und es dabei geradeaus zu führen, einen Schräglauf also zu verhindern oder in engen Grenzen zu halten. Diesem Zweck dient die erfindungsgemäße Ausgestaltung der Walzstation 26, deren Walzen 134 und 136 in jedem Fall für den Vortrieb des Sägeblattes 10 verantwortlich sind, auch wenn sie, wie insbesondere beim Messen und Beseitigen von Beulen und Dellen im Sägeblatt, von der Anpreßvorrichtung 138 nur mit mäßiger, unterhalb der Verformungsgrenze liegender Kraft gegen das Sägeblatt 10 gedrückt werden. Der Geradeauslauf des Sägeblattes 10 wird von einer der Meßstationen 28 überwacht, an denen der Blattrücken 14 entlangläuft.
   Für die Überwachung des Geradeauslaufs wird vorzugsweise die in Fig.1 bis 6 am weitesten rechts angeordnete der drei Meßstationen 28 verwendet, während die am weitesten links angeordnete Meßstation 28 in diesem Zusammenhang als Fixpunkt für die Lage des Blattrückens 14 betrachtet werden kann. Für den Geradeauslauf des Sägeblattes 10 interessieren somit die Bewegungen des zu der rechten Meßstation 28 gehörigen, am Blattrücken 14 anliegenden Meßschlittens 148. Weicht der Blattrücken 14 im Bereich der rechten Meßstation 28 von seiner vorgesehenen Lage ab, so bewirkt dies eine Axialverschiebung der Stange 146 samt Platte 156 mit der Folge, daß der Sensor 154 Signale entsprechend der Größe und Richtung der Lageabweichung des Sägeblattes 10 abgibt. Die Steuereinheit 160 verarbeitet diese Signale - und falls gewünscht zusätzlich von den beiden übrigen Meßstationen 28 abgegebene Signale - zu Steuerbefehlen für den Stelltrieb 142, der daraufhin das Walzengestell 132 der Walzstation 26 um die senkrechte Schwenkachse J in der einen oder anderen Richtung entsprechend dem Doppelpfeil M in Fig.2 schwenkt.
   Dies bedeutet, daß die Walzen 134 und 136 in Bezug auf die normale Laufrichtung A schräggestellt werden und dadurch das Sägeblatt 10 je nach Größe und Richtung seiner festgestellten Lageabweichung mehr oder weniger stark in Richtung zu der in Fig.1 bis 5 rechten Meßstation 28 hin oder von dieser weg fördern. Der Stelltrieb 142 stellt die Walzen 134 und 136 spätestens dann wieder gerade, wenn die Lageabweichung des Sägeblattes 10 an der rechten Meßstation 28 beseitigt ist. Um eine frühere Reaktion zu ermöglichen, können zusätzlich Signale der mittleren Meßstation 28 verwendet werden, die zwischen der Meßstation 22 und der Planierstation 24 angeordnet ist.
b) Zum Feststellen von Beulen und Dellen im Sägeblatt 10 wird, während dieses mehrere Umläufe im Sinne des Pfeils A ausführt, der Meßschlitten 94 schrittweise in verschiedene Stellungen gebracht, in denen der Meßwertaufnehmer 106 das Sägeblatt 10 wie üblich in mehreren parallelen Spuren vermißt. Die dabei gewonnenen Meßwerte werden mit Angaben über den vom Sägeblatt 10 zurückgelegten Weg tabellarisch in Beziehung gesetzt und dazu benutzt, die Planierstation 24 hinsichtlich Ort und Größe der Einwirkung ihrer Walzen 120 und 122 auf das Sägeblatt in üblicher Weise zu steuern.
   Erfindungsgemäß hat die Meßstation 22 in Verbindung mit den entsprechend Breite und Dicke des Sägeblattes 10 symmetrisch zur Meßebene B einstellbaren Niederhaltern 36 und 46 die zusätzliche Aufgabe, das Spannungsprofil des Sägeblattes 10 zu messen. Zu diesem Zweck wird der Elektromagnet 112 unter Spannung gesetzt, so daß er den Meßwertaufnehmer 106 vom Sägeblatt 10 wegschwenkt; für die Aufnahme des Spannungsprofils des Sägeblattes 10 ist ausschließlich der Meßwertaufnehmer 114 zuständig. Das Spannungsprofil wird gemäß einem von (a) unabhängigen Aspekt der Erfindung durch Betätigen der Stützeinrichtung 48 meßbar gemacht. Zu diesem Zweck wird die Hubvorrichtung 88 ausgefahren und dadurch die Stützrolle 86 um eine durch die Einstellung des Hubbegrenzers 90 vorbestimmte Strecke angehoben. Das von den Niederhaltern 36 und 46 in gleichen Abständen beiderseits der Meßebene B auf den Blattauflagen 32 und 42 festgehaltene, also am Abheben gehinderte Sägeblatt 10 erhält in der Meßebene B dadurch, daß es dort von der Stützrolle 86 mittig angehoben wird, ein Profil, das von der Größe und Verteilung der inneren Spannungen im Sägeblatt 10 abhängt. Dieses Profil wird an mehreren über die Länge des Sägeblattes 10 verteilten Querschnitten vom Meßwertaufnehmer 114 gemessen, indem der Meßschlitten 94 jeweils bei Stillstand des Sägeblattes quer über dieses hinwegbewegt wird.
   Entsprechend den Meßergebnissen kann das Sägeblatt 10 bei anschließenden, mit im allgemeinen konstanter Geschwindigkeit stattfindenden Durchläufen von der Walzstation 26 in ansich üblicher Weise bearbeitet werden, wobei die von der Anpreßvorrichtung 138 belasteten Walzen 134 und 136 in der erforderlichen Anzahl nebeneinander liegender Bahnen auf das Sägeblatt verformend einwirken.
c) Art und Größe der erforderlichen Einwirkung der Walzstation 26 auf das Sägeblatt 10 hängen auch vom Verlauf des Blattrückens 14 ab. Das Sägeblatt 10 wird im Sägewerksbetrieb von den auf die Zähne 12 einwirkenden Schnittkräften im allgemeinen im Bereich der Zähne stärker gedehnt als im Bereich des Blattrückens 14; deshalb muß dieser beim Richten gedehnt werden, damit das Sägeblatt bei seinem erneuten Einsatz auf einer Sägemaschine im Bereich der Zähne 12 unter verstärkter Zugspannung steht, so daß es nicht flattert. Wenn also das über den Maschinentisch 16 laufende Sägeblatt 10 einen konkaven Blattrücken 14 aufweist, ist dies im allgemeinen ein Signal dafür, daß verformende Einwirkungen der Walzstation 26 vorallem in der Nähe des Blattrückens 14 erforderlich sind. Um Lage und Intensität der zum Geraderichten erforderlichen Einwirkung auf das Sägeblatt 10 bestimmen zu können, ist es erforderlich, die Krümmung des Blattrückens 14 zu messen. Dies geschieht üblicherweise dadurch, daß ein Fachmann ein Lineal an den Blattrücken 14 anlegt und aus Lage und Größe des dabei auftretenden Lichtspalts auf die Art der erforderlichen Verformung des Sägeblattes schließt.
   Erfindungsgemäß ist diese Aufgabe jedoch den drei Meßstationen 28 zugewiesen, deren Signale zu diesem Zweck gemeinsam ausgewertet werden, indem die Lagen der drei in vorgegebenen Abständen voneinander am Blattrücken 14 anliegenden Meßschlitten 148 als Koordinaten dreier auf dem Kreis liegender Meßpunkte gewertet werden. Die drei Meßpunkte haben in Bewegungsrichtung A des Sägeblattes 10 unveränderliche Abstände voneinander. Ihre Koordinaten in dieser Richtung stehen also fest; veränderlich sind nur ihre im rechten Winkel zur Bewegungsrichtung A des Sägeblattes 10, in dessen waagerechter Ebene, gemessenen Koordinaten. Daraus ermittelt die Rechen- und Steuereinheit 160 während eines Umlaufs des Sägeblattes 10 fortlaufend den Krümmungsradius des Blattrückens 14 und zugleich die für den Geradeauslauf des Sägeblattes 10 erforderliche Einstellung des Stelltriebs 142. Dies ist ein selbständiger Aspekt der Erfindung, der unabhängig ist von der unter (a) beschriebenen Benutzung mindestens einer der Meßstationen 28 zum Sichern des Geradeauslaufs des Sägeblattes 10, und erst recht unabhängig von der unter (b) beschriebenen Messung des Spannungsprofils.
d) Wenn anstelle des dargestellten Sägeblattes 10 ein breiteres Sägeblatt vermessen und/oder gerichtet werden soll, werden die vordere Blattauflage 42 und die vorderen Niederhalter 46 und 58 entsprechend nach vorne verstellt, und in entsprechender Weise werden die vorderen Laufringe 170 nach vorne verstellt, so daß das nun zu bearbeitende Sägeblatt wiederum in der Nähe seiner Zähne 12 abgestützt, geführt und in der erforderlichen Weise niedergehalten wird, ohne daß die dazu erforderlichen Maschinenteile die Zähne 12 berühren. Die Abstützung, Führung und Niederhaltung in der Nähe des Blattrückens 14 bleibt unverändert. Die Verstellbarkeit des Abstandes der Niederhalter 36 und 46 von der Meßebene B ist in Verbindung mit der beschriebenen Abtastung des Spannungsprofils durch die Meßstation 22 ein weiterer selbständiger Aspekt der Erfindung. Ebenso wird in der beschriebenen Einstellbarkeit und Verrastung deer Laufringe 70 eine selbständige Erfindung gesehen.

## Patentansprüche

1. Verfahren zum Vermessen und Korrigieren des Spannungsprofils eines langgestreckten Sägeblattes, insbes. für Bandsägen, bei dem
- das Sägeblatt (10) in einer mit seiner Längsrichtung im wesentlichen übereinstimmenden Bewegungsrichtung (A) durch eine Meßstrecke und eine Walzstrecke bewegt wird,
- zwei Randzonen des Sägeblattes (10) auf der Meßstrecke abgestützt und in einem Anfangsbereich und einem Endbereich davon niedergehalten werden,
- das Profil des Sägeblattes (10) in einer zu seiner Bewegungsrichtung (A) normalen Meßebene (B) im mittleren Bereich der Meßstrecke gemessen wird,
- Daten der Profilhöhe in bezug auf eine quer zur Bewegungsrichtung (A) verlaufende Sehne, koordiniert mit Daten des Abstandes der Meßpunkte von einem Rand (14) des Sägeblattes (10) und mit Daten der Längsbewegung des Sägeblattes, gespeichert werden und
- das Sägeblatt (10) auf der Walzstrecke entsprechend diesen Daten zonenweise in der Bewegungsrichtung (A) gewalzt wird,
**dadurch gekennzeichnet, daß**
- die Randzonen des Sägeblattes (10) im Anfangsbereich und im Endbereich der Meßstrecke in einer gemeinsamen, die Bewegungsrichtung (A) enthaltenden Bezugsebene gehalten werden,
- das Sägeblatt (10) mit einer nur im mittleren Bereich der Meßstrecke ausgeübten Stützkraft über die Bezugsebene angehoben wird und
- das so gebildete Spannungsprofil gemessen wird.

2. Verfahren nach Anspruch 1,
**dadurch gekennzeichnet, daß** die Stützkraft nur in der Meßebene (B) ausgeübt wird.

3. Verfahren nach Anspruch 1 oder 2,
**dadurch gekennzeichnet, daß** die Stützkraft nur in einem Abstand von den beiden Randzonen ausgeübt wird.

4. Verfahren nach Anspruch 3,
**dadurch gekennzeichnet, daß** die Stützkraft nur in einer Zone ausgeübt wird, in der die maximale Profilhöhe zu erwarten ist.

5. Verfahren nach einem der Ansprüche 1 bis 4,
**dadurch gekennzeichnet, daß** Niederhaltekräfte nur in entsprechend der Breite und Dicke des Sägeblattes (10) variablen, gleichen Abständen vor und hinter der Meßebene (B) auf die Randzonen ausgeübt werden.

6. Verfahren nach einem der Ansprüche 1 bis 5,
**dadurch gekennzeichnet, daß** im Wechsel mit dem Messen und Korrigieren des Spannungsprofils in derselben Meßebene (B) Beulen und Dellen des Sägeblattes (10) gemessen werden und zu diesem Zweck die genannte Stützkraft beseitigt und das Sägeblatt (10) auf der gesamten Länge der Meßstrecke in der Bezugsebene flachliegend bewegt wird.

7. Vorrichtung zum Durchführen des Verfahrens nach einem der Ansprüche 1 bis 6 mit
- einem Maschinentisch (16), auf dem ein langgestrecktes Sägeblatt (10), insbes. für eine Bandsäge, in einer mit seiner Längsrichtung im wesentlichen übereinstimmenden Bewegungsrichtung (A) bewegbar ist,
- einer am Maschinentisch (16) angeordneten Meßstation (22) mit
-- einer Meßebene (B), die sich normal zur Bewegungsrichtung (A) erstreckt, und in der mindestens ein Meßwertaufnehmer (106, 114) angeordnet ist,
-- einem Paar parallele Blattauflagen (32, 42) für je eine Randzone des Sägeblattes (10) und
-- zwei Niederhalterpaaren (36, 46), die zum Andrücken des Sägeblattes (10) an die Blattauflagen (32, 42) in einem Anfangs- bzw. Endbereich der Meßstation (22) angeordnet sind,
**dadurch gekennzeichnet,**
- **daß** die Blattauflagen (32, 42) in einer gemeinsamen Bezugsebene liegen und
- in der Meßebene (B) eine Stützeinrichtung (48) angeordnet ist, die aus einer Ruhestellung, in der sie nicht über die Bezugsebene hinausragt, in eine Stützstellung bewegbar ist, in der sie das Sägeblatt (10) anhebt.

8. Vorrichtung nach Anspruch 7,
**dadurch gekennzeichnet, daß** die Niederhalterpaare (36, 46), zur Meßebene (B) symmetrisch bleibend, in bzw. entgegen der Bewegungsrichtung (A) des Sägeblattes (10) zueinander hin und voneinander weg verstellbar sind.

9. Vorrichtung nach Anspruch 7,
**dadurch gekennzeichnet, daß** die Stützeinrichtung (48) quer zur Bewegungsrichtung (A) des Sägeblattes (10) verstellbar ist.

10. Vorrichtung nach Anspruch 9,
**dadurch gekennzeichnet, daß** zur Anpasssung an Sägeblätter (10) unterschiedlicher Breite
- eine der Blattauflagen (42) von der anderen Blattauflage (32) weg und zu ihr hin verstellbar ist,
- ein Niederhalter (46) jedes Niederhalterpaars (36,46) gegenüber dem anderen Niederhalter (36) in gleicher Weise wie die zugehörige Blattauflage (42) verstellbar ist und
- die Stützeinrichtung (48) mit der verstellbaren Blattauflage (42) und den verstellbaren Niederhaltern (46) durch ein Getriebe (50- 54) verbunden ist, das bei Verstellung der Blattauflage (42) und Niederhalter (46) um eine bestimmte Strecke die Stützeinrichtung (48) in gleicher Richtung, jedoch um die halbe Strecke, verstellt.

11. Vorrichtung nach einem der Ansprüche 7 bis 10,
dadurch gkennzeichnet, daß die Stützeinrichtung (48) eine Stützrolle (86) aufweist, die ungefähr in der Mitte der Unterseite des Sägeblattes (10) anliegt.

## Claims

1. A method for measuring and correcting the stress profile of an elongated saw blade, in particular for band saws, wherein
- the saw blade (10) is moved through a measuring path and a rolling path in a direction of travel (A) which essentially corresponds to its longitudinal direction;
- two marginal regions of the saw blade (10) are supported on the measuring path and held down in a start portion and an end portion of same;
- the profile of the saw blade (10) is measured in the central area of the measuring path in a measuring plane (B) which is orthogonal to its direction of travel (A);
- data of the profile height relative to a chord which extends transversely to the direction of travel (A), coordinated with data of the distance of the measuring points from an edge (14) of the saw blade (10) and data of the longitudinal movement of the saw blade are stored; and
- the saw blade (10) is rolled on the rolling path in a region-by-region manner in the direction of travel (A) in accordance with said data,
**characterised in that**
- the marginal regions of the saw blade (10) are retained in the start area and the end area of the measuring path in a common reference plane which includes the direction of travel (A);
- the saw blade (10) is lifted above the reference plane by a supporting force which is exerted only in the central area of the measuring path; and
- the stress profile developed in this manner is measured.

2. The method according to claim 1,
**characterised in that** the supporting force is exerted in the measuring plane (B) only.

3. The method according to claim 1 or 2,
**characterised in that** the supporting force is exerted only at a distance from the two marginal regions.

4. The method according to claim 3,
**characterised in that** the supporting force is exerted only in a region in which the maximum profile height is to be expected.

5. The method according to one of claims 1 to 4,
**characterised in that** the holding-down forces are exerted only on the marginal regions in variable, identical distances upstream and downstream the measuring plane (B) according to the width and thickness of the saw blade (10).

6. The method according to one of claims 1 to 5,
**characterised in that** alternately with measuring and correcting of the stress profile, bulges and dents of the saw blade (10) are measured in the same measuring plane (B) and said supporting force is removed for this purpose and the saw blade (10) is moved over the entire length of the measuring path so as to be flat in the reference plane.

7. An apparatus for carrying out the method according to one of claims 1 to 6, comprising
- a machine table (16) on which an elongated saw blade (10), in particular for a band saw, is movable in a direction (A) which essentially corresponds to its longitudinal direction;
- a measuring station (22) arranged at the machine table (16), having
-- a measuring plane (B) which extends orthogonally to the direction of travel (A) and in which at least one sensor (106, 114) is arranged;
-- one pair of parallel blade supports (32, 42) for one edge region each of the saw blade (10); and
-- two pairs of holding-down devices (36, 46) that are arranged in a start and an end zone, respectively, of the measuring station (22) for pressing the saw blade (10) onto the blade supports (32, 42),
**characterised in that**
- the blade supports (32, 42) lie in a common reference plane and
- a supporting means (48) is arranged in the measuring plane (B), which is movable from a rest position where it does not project beyond the measuring plane (B) into a supporting position where it lifts the saw blade (10).

8. The apparatus according to claim 7,
**characterised in that** the pairs of holding-down devices (36, 46), while remaining symmetrical to the measuring plane (B), are adjustable towards and away from each other in or opposite to the direction of travel (A) of the saw blade.

9. The apparatus according to claim 7,
**characterised in that** the supporting means (48) is adjustable transversely to the direction of travel (A) of the saw blade (10).

10. The apparatus according to claim 9,
**characterised in that** for adaptation to saw blades (10) of different widths
- one of the blade supports (42) can be adjusted away from or towards the other blade support (32);
- one holding-down device (46) of each pair of holding-down devices (36, 46) can be adjusted relative to the other holding-down device (36) in the same manner as the associated blade support (42); and
- the supporting means (48) is connected with the adjustable blade support (42) and the adjustable holding-down devices (46) via a transmission (50 - 54) which adjusts the supporting means (48) upon the adjustment of the blade support (42) and the holding-down devices (48) by a certain distance in the same direction, but by half the distance.

11. The apparatus according to one of claims 7 to 10,
**characterised in that** the supporting means (48) comprises a supporting roller (86) which abuts approximately in the centre of the bottom of the saw blade (10).

## Revendications

1. Procédé pour mesurer et corriger le profil de tension d'une lame de scie allongée, en particulier pour des scies à ruban, dans lequel :
- on déplace la lame de scie (10) à travers un trajet de mesure et un trajet de laminage dans une direction de déplacement (A) coïncidant sensiblement avec sa direction longitudinale,
- deux zones marginales de la lame de scie (10) sont supportées sur le trajet de mesure et maintenues vers le bas dans une zone initiale et dans une zone finale de celui-ci,
- on mesure le profil de la lame de scie (10) dans un plan de mesure (B) normal à sa direction de déplacement (A) dans la zone médiane du trajet de mesure,
- on mémorise les données de la hauteur du profil par rapport à une corde s'étendant perpendiculairement à la direction de déplacement (A), coordonnées avec des données de la distance entre les points de mesure et une bordure (14) de la lame de scie (10) et avec des données du déplacement longitudinal de la lame de scie, et
- on lamine la lame de scie (10) sur le trajet de laminage en correspondance de ces données par zones en direction de déplacement (A),
**caractérisé en ce que**
- les zones marginales de la lame de scie (10) sont maintenues, dans la zone initiale et dans la zone finale du trajet de mesure, dans un plan de référence commun contenant la direction de déplacement (A),
- on soulève la lame de scie (10) au-dessus du plan de référence par une force de soutien exercée seulement dans la zone médiane du trajet de mesure, et
- on mesure le profil de tension ainsi formé.

2. Procédé selon la revendication 1, **caractérisé en ce que** la force de soutien est exercée uniquement dans le plan de mesure (B).

3. Procédé selon l'une ou l'autre des revendications 1 et 2, **caractérisé en ce que** la force de soutien est exercée uniquement à une distance des deux zones marginales.

4. Procédé selon la revendication 3, **caractérisé en ce que** la force de soutien est exercée uniquement dans une zone dans laquelle on s'attend à la hauteur de profil maximale.

5. Procédé selon l'une des revendications 1 à 4, **caractérisé en ce que** des forces de maintien vers le bas sont exercées sur les zones marginales uniquement à des distances égales en avant et en arrière du plan de mesure (B) et variables en correspondance de la largeur et de l'épaisseur de la lame de scie (10).

6. Procédé selon l'une des revendications 1 à 5, **caractérisé en ce que** l'on mesure, en alternance avec la mesure et la correction du profil de tension, dans le même plan de mesure (B), des bosses et des creux de la lame de scie (10), et à cet effet on élimine ladite force de soutien et on déplace la lame de scie (10) à plat dans le plan de référence sur toute la longueur du trajet de mesure.

7. Appareil pour mette en oeuvre le procédé selon l'une des revendications 1 à 6, comportant
- une table de machine (16) sur laquelle une lame de scie allongée (10), en particulier pour une scie à ruban, se laisse déplacer dans une direction de déplacement (A) sensiblement coïncidant avec sa direction longitudinale,
- une station de mesure (22) agencée sur la table de machine (16), comportant
-- un plan de mesure (B) qui s'étend normalement par rapport à la direction de déplacement (A) et dans lequel est agencé au moins un capteur de valeur de mesure (106, 114),
-- une paire de supports de lame parallèles (32, 42) pour une zone marginale respective de la lame de scie (10), et
-- deux paires d'éléments de maintien vers le bas (36, 46) qui sont agencées dans une zone initiale ou finale de la station de mesure (22) pour presser la lame de scie (10) contre les supports de lame (32, 42),
**caractérisé en ce que** :
- les supports de lame (32, 42) se trouvent dans un plan de référence commun, et
- un dispositif de soutien (48) est agencé dans le plan de mesure (B) et peut être déplacé à partir d'une position de repos dans laquelle il ne dépasse pas au-delà du plan de référence jusque dans une position de soutien dans laquelle il soulève la lame de scie (10).

8. Appareil selon la revendication 7, **caractérisé en ce que** les paires d'éléments de maintien vers le bas (36, 46) peuvent être déplacées l'une vers l'autre ou l'une en éloignement de l'autre dans la direction de déplacement (A) de la lame de scie (10) ou en sens opposé, tout en restant symétriques par rapport au plan de mesure (B).

9. Appareil selon la revendication 7, **caractérisé en ce que** le dispositif de soutien (48) est déplaçable perpendiculairement à la direction de déplacement (A) de la lame de scie (10).

10. Appareil selon la revendication 9, **caractérisé en ce que** pour l'adaptation à des lames de scie (10) de largeurs différentes :
- l'un des supports de lame (42) est déplaçable en éloignement de l'autre support de lame (32) et en direction vers celui-ci,
- un élément de maintien vers le bas (46) de chaque paire d'éléments de maintien vers le bas (36, 46) est déplaçable par rapport à l'autre élément de maintien vers le bas (36) de la même manière que le support de lame associé (42), et
- le dispositif de soutien (48) est relié au support de lame déplaçable (42) et aux éléments de maintien vers le bas déplaçables (46) par un mécanisme de transmission (50 à 54) qui, lors du déplacement du support de lame (42) et des éléments de maintien vers le bas (46) d'un trajet déterminé, déplace le dispositif de soutien (48) dans la même direction, mais de la moitié du trajet.

11. Appareil selon l'une des revendications 7 à 10, **caractérisé en ce que** le dispositif de soutien (48) comprend un galet (86) qui est appliqué approximativement au milieu de la face inférieure de la lame de scie (10).
